# EUROPEAN PATENT APPLICATION

(11) **EP 3 967 440 A1**
(43) Date of publication of application: **16.03.2022**
(21) Application number: 20195585.3
(22) Date of filing: 10.09.2020
(51) Int. Cl.: B23K 26/14, B23K 26/38

(54) **GAS EJECTION**

(71) Applicant: HP Scitex Ltd., 42506 Netanya (IL)
(72) Inventor: VEIS, Alex, 42505 Netanya (IL)
(74) Representative: Haseltine Lake Kempner LLP

(57) **Abstract**

An example gas ejection device, for a cutting apparatus, comprises a housing to retain a gas and a slot provided in the housing. A nozzle is movably disposed within the slot. The nozzle is to discharge a gas retained in the housing.

## Description

### BACKGROUND

Some cutting stations may direct a laser toward a print media to cut the print media.

### BRIEF DESCRIPTION OF DRAWINGS

Examples will now be described, by way of non-limiting example, with reference to the accompanying drawings, in which:
Figure 1 is a simplified schematic of an example gas ejection device;
Figure 2 is a simplified schematic of an example gas ejection device;
Figure 3 is a flowchart of an example of a method; and
Figures 4a and 4b are simplified schematics of an example cutting apparatus.

### DETAILED DESCRIPTION

Some examples herein relate to a cutting apparatus that is to cut a substrate or print media by use of a laser. For example, a cutting apparatus may laser cut a substrate sheet into a number of smaller sheets (e.g. two, three, or four smaller ones), for example sheets of a third or half the size of the original sheet, for further processing. The substrate may be provided to the cutting apparatus as a sheet and the laser may be to cut straight lines in the substrate to produce smaller straight, or rectangular sheets. In some examples, the substrate may comprise a paper, fabric or plastic substrate. In some examples, cutting the substrate by laser may generate smoke and the heat from the laser may cause the smoke to ignite.

Some examples herein relate to a device that can retain a gas, for example an inert, noble or not flammable gas such as Nitrogen (for example, a pressurised gas), for example a pressurised gas, the device having a nozzle to direct that gas proximate an area of the substrate that it is to be cut. The gas may comprise a cold, low temperature, gas. The gas may comprise air, for example ambient air. Therefore, in these examples, a device is provided that can eject a gas proximate an area of the substrate to be cut by a laser to starve that local area of oxygen to prevent any combustion or burning (e.g. of any generated smoke), or ejecting the gas proximate the cutting area may prevent any smoke from being generated by the cutting apparatus. Such devices may also blow any generated smoke away (thereby reducing any lingering odour produced by the smoke). As will be described below, some example devices comprise a nozzle to discharge the gas which is movable in a slot of the device and, in this way, the gas source may move independently of the laser cutting the substrate but may also be able to follow, or track, the movement of the laser so as to deprive any area of oxygen on a cutting path of the laser. In these examples a controller may cause the nozzle and a device emitting the cutting laser beam such that the nozzle moves synchronously, or concurrently, with the cutting point of the laser beam (the point at which the laser first makes contact with the substrate to cut the substrate).

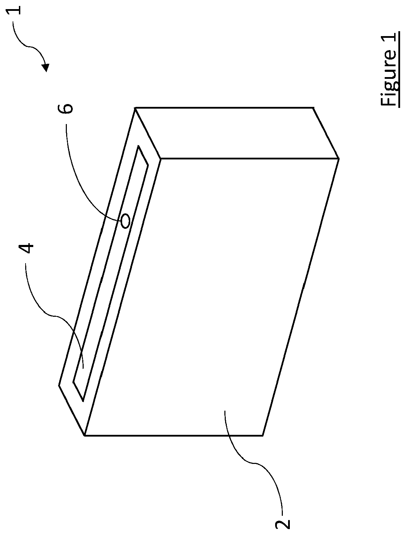

Figure 1 shows a gas ejection device 1 for a cutting apparatus (not shown in Figure 1). The gas ejection device 1 comprises a housing 2, the housing 2 to retain a gas, and a slot 4 provided in the housing 2. The gas ejection device 1 further comprises a nozzle 6, the nozzle 6 is movably disposed within the slot 4 and is to discharge a gas retained in the housing. The gas retained by the housing 2 may comprise an inert gas, a noble gas, a not flammable gas. The gas may comprise Nitrogen. The gas may comprise a pressurized gas. The gas ejection device 1 may be to discharge, or eject, a gas towards an area to starve that area of oxygen.

The gas ejection device 1 may be to eject a gas toward a cutting area of a substrate that is being cut by a cutting apparatus. That the nozzle 6 to eject the gas is movable within a slot of the housing 2 means that the nozzle 6 is able to be moved, for example under the control of a controller (not shown in Figure 1) such that the nozzle 6 may be positioned proximate a cutting area. In this way, by discharging a gas, such as pressurized Nitrogen, toward an area of the substrate where a laser beam is cutting the substrate, the area is starved of oxygen such that any smoke generated during the cutting process, or the substrate itself, is prevented from being ignited.

The nozzle 6 may be attached to the slot 4, for example to an outer periphery, or edge, of the slot defining the slot 4, e.g. by a roller or slidable coupling (such as a guide rail, e.g. a guide rail attached to the slot 4 or housing 2), so that the nozzle 6 can move relative to the slot 4 and relative to the housing 2. The nozzle 6 may be movable within the slot 4 of the housing 2 and may be movable along the length of the slot 4. In the Figure 1 example, the slot 4 comprises a straight slot but in other examples the slot 4 may comprise a curved slot. In examples where the nozzle 6 is attached to the slot 4 via a slidable coupling the coupling may comprise a driven coupling, driven by a motor, and a controller may control the operation of the motor to move the nozzle 6 along the length of the slot 4.

To retain a gas in the housing 2, the housing 2 may comprise a resiliently deformable material having a slit, with the resiliently deformable material (such as rubber) being biased to a closed position, to close the slit, with the nozzle 6 being movable in the slit. In these examples the slot 4 may comprise the slit, or the resiliently deformable material, and as the nozzle 6 moves through the slit the resiliently deformable material may keep the slit biased closed such that minimal gas escapes the housing 2 through any gaps in the slit (most gas therefore exiting the device 1 through the nozzle 6). In other examples, the slot may comprise a slit in an arrangement of brushes, for example brush insulation, and the nozzle 6 may be movable through the brushes.

In some examples, the housing 2 comprises an inlet, for example a check valve or one-way valve, to permit the ingress of gas into the housing 2 and prevent the egress of gas from within the housing 2. The nozzle 6 may be considered to comprise an outlet for the housing 2 and, in some examples, the nozzle 6 comprises one potential passage into or out of the housing 2. The nozzle 6 in some examples may comprise a check valve or one-way valve to permit the egress of gas retained by the housing 2 but prevent the ingress of gas to the housing 2. In some examples, the nozzle 6 may comprise a pressure nozzle (for example a high pressure nozzle) to eject the gas retained by the housing 2 at a pressure higher than the pressure of the gas in the housing 2. To retain the gas, the housing 2 may comprise a hollow box.

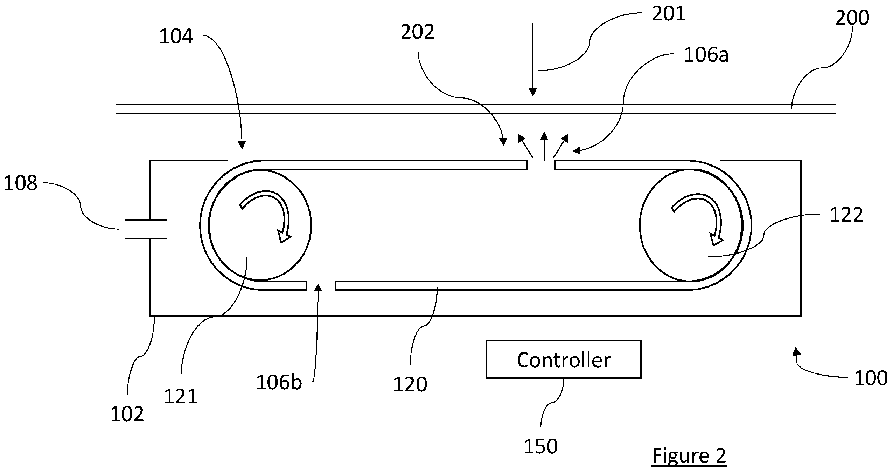

Figure 2 shows an example gas ejection device 100, which may comprise the gas ejection device 1 as described above with reference to Figure 1. The gas ejection device 100 is for a cutting apparatus, which is not shown in Figure 2, although a substrate 200, which is to be cut by a cutting apparatus, is shown in Figure 2. Like the gas ejection device 1 of the Figure 1 example, the gas ejection device 100 comprises a housing 102, the housing 102 to retain a gas, and a slot 104 is provided in the housing 102. The gas ejection device 100 comprises a nozzle 106a, 106b movably disposed within the slot 104, the nozzle 106a, 106b being to discharge a gas retained in the housing 102. The example gas ejection device 100 shown in Figure 2 comprises two nozzles, a first nozzle 106a and a second nozzle 106b, with each nozzle 106a, 106b being movably disposed within the slot 104, and each nozzle 106a, 106b being to discharge a gas retained in the housing 102. However, in other examples the gas ejection device 100 may comprise one nozzle (e.g. like the device 10 shown in Figure 1).

In this example, the housing 102 is to retain a pressurised gas. The housing 102 comprises an inlet 108 for gas. The inlet 108 may be to receive a pressurised gas or may comprise a pressure valve or nozzle (for example a high pressure valve or nozzle) to intake a gas at ambient pressure, pressurise the gas, and to discharge pressurised gas into the housing 102. The gas ejection device 100 comprises a belt 120 which is movably disposed inside the housing 102. In this example, each nozzle 106a, 106b comprises a hole in the belt 120. In other words, the belt 120 comprises a first hole 106a and a second hole 106b. In this way, pressurised gas held within the housing 102 will be caused to be ejected from the device 100 via the nozzle 106a, 106b, due to the pressure differential across the belt 120. The gas in the housing 102 may therefore be causing to flay, or spray, outwardly from the device 100 via the hole in the belt, as indicated by the arrows in Figure 2. The pressure differential across the belt 120 may also force the belt 120 against the slot 106 of the device to create a seal across the belt 120. In other words, the pressure inside the housing 102 may exert a force on the belt 120 radially away from the centre of the housing 102 which may press the belt 120 against the slot 106 of the housing. This may mean that minimal gas escapes the housing 102 around the belt 120 and out of the slot 106 which, in turn, may mean that the majority of the gas exits the device 100 via the nozzle 106a, 106b. The belt may comprise a metallic element and/or a flexible element. As for the device 10 of Figure 1, the housing 102 may comprise a hollow box.

The gas ejection device 100 comprises two movable rollers 121, 122 and the belt 120 is movably disposed about the rollers. For example, the belt 120 may be wound around the two rollers 121, 122 forming and endless loop wrapping the rollers 121, 122. The rollers 121, 122 may be to move the belt 122 such that movement of the rollers 121, 122 (e.g. rotation of the rollers, as indicated by the arrows) may move the belt 120. In other examples however, the device 100 may comprise one roller and the belt may be movably disposed about one roller.

Figure 2 shows the gas ejection device 100 being disposed about a substrate 200, for example a substrate to be cut by a laser beam schematically indicated by the arrow 201. The nozzle 106a of the gas ejection device 100 is positioned so as to eject a gas stream (indicated by the arrows 202) toward a cutting area of the substrate 200. In other words, the nozzle 106a of the gas ejection device 100 is positioned so as to eject a gas stream 202 toward an area of the substrate 200 being cut by the laser 201. In this way the device 100 is able to eject a gas toward a hot area where they may be smoke, and therefore which may be prone to ignition, to starve the area of oxygen to prevent any combustion. In another example, the gas retained by the housing 2 may comprise a cold, or low-temperature, gas to maintain the cutting area at a temperature preventing the ignition or combustion of any gases produced in the cutting process, or indeed of the substrate itself.

The gas ejection device 100 in this example comprises a controller, schematically indicated at 150 which is to control the movement of the rollers 121, 122. The controller 150 may comprise a processor. The controller 150 in this example is to control the movement of the belt 120, which may be achieved via controlling the movement of the rollers 121, 122, and therefore is to control movement of the nozzle 106a, 106b in the belt. As Figure 2 shows, the two nozzles 106a, 106b are provided in the belt substantially opposite one another such that if a nozzle (for example, nozzle 106a shown in Figure 2 toward a right of the device relative to the Figure), were positioned at one end of the slot 104, and therefore one end of the device 100, and then was to be positioned at another, opposite, end of the slot (e.g. the left of Figure 2) then the belt may be caused to move clockwise (rather than anticlockwise) to move the second nozzle 106b to that target position, the second nozzle requiring a shorter distance and therefore time than the first nozzle 106a to reach this target location. The controller 150 may control the belt 120 to move (e.g. via control of the rollers 121, 122) at a constant, or non-constant speed. For example, the controller 150 may cause the belt 120 to stop (e.g. to wait for the next cut to be made), and/or to accelerate (e.g. to position the nozzle 106a, 106b proximate a cut).

In some examples the controller 150 is also to control the laser (that emits the laser beam 201), for example the controller 150 may be to control the laser to move, e.g. rotate, to change the position of the cut on the substrate, and the controller 150 may further be to control the nozzle 106a, 106b (e.g. via controlling the belt 120, e.g. via the rollers 121, 122) to move synchronously and/or concurrently with the laser. In these examples, the controller 150 may be to cause the nozzle 106a, 106b to move synchronously and/or concurrently with the laser during a cutting operation. The controller 150 in some examples may also be to control the operation of the nozzle, for example the controller 150 may be to cause the nozzle 106a, 106b to selectively discharge the gas retained in the housing 102. In these examples, the nozzle may comprise a valve and the controller 150 may be to selectively control or cause the nozzle valve to open.

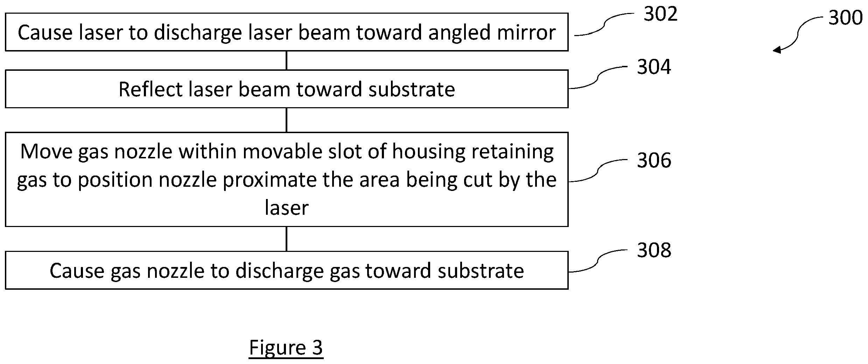

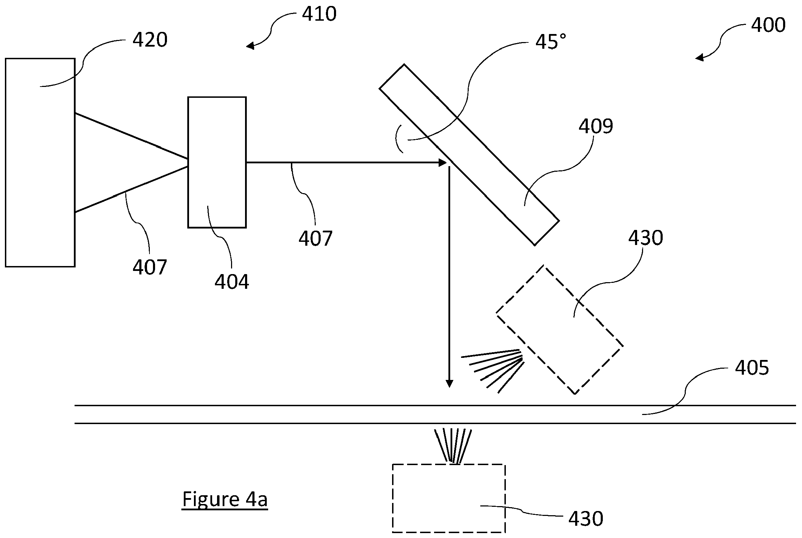

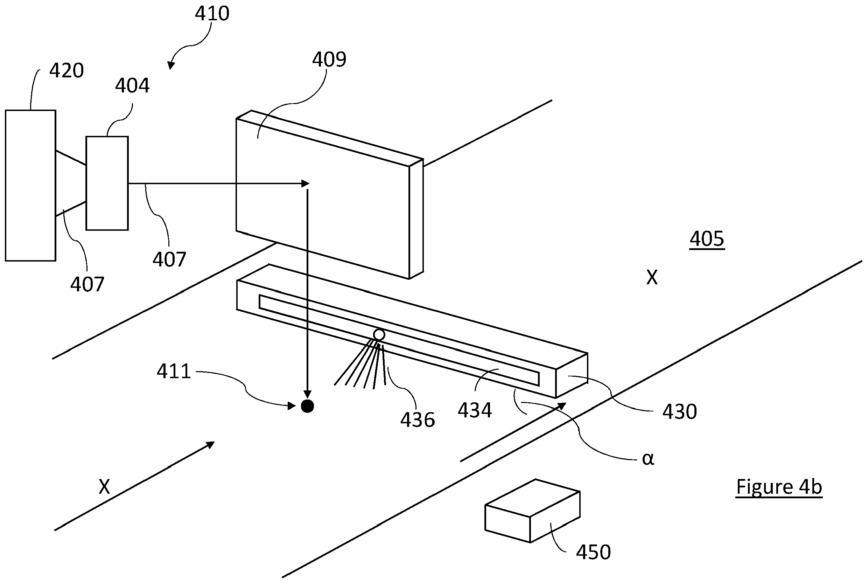

Figure 3 shows an example method 300. The method 300, e.g. any of the blocks thereof, may be performed by a processor or controller, such as the controller 150 described above with reference to Figure 2. The method 300 may comprise a method of cutting a substrate or print media, e.g. by a cutting apparatus (such as the cutting apparatus 400 to be described with reference to Figures 4a and 4b). The method 300 may comprise controlling a cutting apparatus (such as the cutting apparatus 400. The method 300 may comprise a method of improving the safety of a cutting operation.

At block 302, the method comprises causing, e.g. by a processor or controller, a laser to discharge, or emit, a laser beam toward an angled mirror. The laser beam and angled mirror may be part of a cutting apparatus which is to cut, via laser, a substrate or print media. The angled mirror may be such that a laser beam emitted parallel to a substrate is reflected, for example at an approximately 90-degree angle, toward the substrate to cut the substrate. Block 302 may comprise executing, e.g. by a processor, an instruction that causes the processor to control a laser to discharge a laser beam toward the angled mirror.

At block 304, the method comprises reflecting, at the angled mirror, the laser beam toward the substrate to cut the substrate. Block 304 may comprise reflecting the laser at 90-degrees relative to a plane of the substrate, or relative to an emitted direction of the laser beam, or relative to a direction of advance of the substrate (e.g. as it advances through a cutting station). Block 304 may comprise controlling, e.g. by a processor or controller, the mirror to move to a target angle such that the laser beam makes contact with the substrate at a target angle, e.g. parallel to a surface normal of the substrate or perpendicular to a plane of the substrate etc.

At block 306, the method comprises moving, e.g. by a processor or a controller, a gas nozzle within a movable slot of a housing retaining a gas such that the nozzle is positioned proximate the area in which the laser beam is cutting the substrate (which may be considered a "cutting area"). In some examples, blocks 304 and 306 may be performed concurrently with one another such that the nozzle is caused to move proximate a cutting area of the substrate as the laser is caused to discharge the laser beam. In these examples, the gas nozzle may be positioned proximate the cutting area immediately prior to the laser beam reaching the substrate or substantially at the same time. In other examples, block 306 may be performed prior to block 304 such that the nozzle is positioned prior to the cutting area of the substrate before the laser is caused to discharge the laser beam.

At block 308, the method comprises causing, e.g. by a processor, the gas nozzle to discharge the gas that is retained by the housing towards the substrate. Block 308 may therefore comprise causing, e.g. by a processor, a cutting area of the substrate to be starved of oxygen by virtue of the gas discharged toward the area. Block 3008 may therefore comprise, in some examples, causing, e.g. by a processor, to discharge a pressurized gas, an inert gas, a noble, gas, air and/or Nitrogen.

As stated above, the method may comprise causing the laser and nozzle to move synchronously with one another. In these examples, the method may comprise moving the laser to change the location of the cut on the substrate. To perform a straight cut, the method may comprise causing the laser to discharge a laser beam toward an extreme end of the mirror and further cause the laser to rotate such that the laser moves across the angled length of the mirror. The angle that the mirror makes with the substrate may be set in proportion to the speed that the substrate advances through the cutting station (e.g. under the mirror) and/or in proportion to the speed of the movement of the laser. In this way, as the laser moves from a first end of the mirror toward a second end of the mirror as the substrate advances thereunder this may cause a straight-line cut to be formed in the substrate (in a direction perpendicular to the direction of substrate advance).

Figures 4a and 4b show an example cutting apparatus 400. The cutting apparatus of this example comprises a cutting station 410. The cutting station 410 is to receive a printed media 405 and comprises a laser cutting device 420 that is to emit a laser beam 407. The cutting station 410 further comprises a mirror 409 and the laser cutting device 420 is to emit the beam 407 toward the mirror 409 and the mirror 409 is to reflect the laser beam toward the printed media 405 to cut the printed media 405. In this example the cutting station 410 comprises a focusing lens 404 that is to focus the emitted laser beam into a focused laser beam 407, the mirror 409 being to reflect the focused laser beam 407 toward the printed media 405 to cut the printed media 405. In other examples, the cutting apparatus 400 may not comprise the focusing lens 404. The mirror 409 in this example is angled with respect to a direction of travel X of the media 405 (or direction of media advance through the cutting station). Referring to Figure 4a, in this example, the mirror is disposed such that the mirror 409 makes an angle of 45 degrees with respect to the printed media 405 or the incident angle of the laser 407, or with the surface normal of the printed media 405, or with the reflected laser beam 407.

The cutting apparatus 400 comprises a discharge device 430, which may comprise the device 10 or the device 100 as described above with reference to Figures 1 and 2. The discharge device 430 comprises a nozzle 436 that is movably disposed in a slot 434 of the discharge device 430. The nozzle 436 is to discharge a gas, for example a gas retained by the device 430, e.g. a housing thereof, toward a location 411 where the laser beam is to cut the printed media 405.

In some examples, and as shown in Figure 4b, the angle that the slot 434 of the device 430 makes with the media direction of travel X is denoted as α. So that the nozzle 436 can move in the slot 434 to track the laser beam, the angle α may be the same angle that the cutting point 411 of the laser makes with media 405 as the media 405 advances through the cutting station as the laser beam 407 moves the length of the mirror 409. In other words, aa projection of the mirror 409 (e.g. a centre line thereof) onto the surface of the print media 405 may make the same angle α with the direction of travel X of the print media 405. Therefore, in these examples, as the laser device 420 causes the laser to move, causing the location 411 where the laser cuts the media to move, the nozzle 436 is able to move in the slot 434 to thereby 'track' the laser beam 407.. As indicated in Figure 4a by the dotted lines, the discharge device 430 may be disposed on an underside or a topside of the media 405, with Figure 4b showing a side view of the apparatus 400 of Figure 4a when the discharge device 430 is disposed on a topside of the media 405. In other words, in some examples the discharge device 430 is disposed so as to direct gas toward a surface of the media 405 that is to be cut by the laser (this example is shown in Figure 4b) but in other examples, the discharge device 430 is disposed so as to direct gas toward a surface of the media 405 that is opposite the surface of the media that is to be cut by the laser (the surface of the media 405 that the laser beam makes contact with first to cut the media 405). Placing the discharge device 430 parallel to the mirror 409 means that the slot 434 may be oriented towards the media 405 which may mean that the nozzle 436 can be moved proximate the area of the media 405 being cut. In these examples, a relatively low amount of gas may be used to eliminate burning of the smoke and/or substrate.

The cutting apparatus 400 in the Figure 4 example comprises a controller 450. The controller 450 may comprise a processor. The controller 450 may be to control movement of the laser cutting device 420, e.g. may control the laser cutting device 420 to rotate to direct the emitted laser beam 407 along the length of the mirror 409. The controller 450 may also be to control movement of the nozzle 436 in the slot 434 of the discharge device 430. In these examples the controller 450 may be to control the movement of the laser cutting device 420 and the nozzle 436 such that the movement of the nozzle 436 is synchronous with the movement of the laser beam making contact with the print media 405. In this way the discharged gas is able to track the spot on the media 405 where the laser 407 is cutting the media to prevent burning wherever the media 405 is being cut. The controller 450 may be to perform the method 300, e.g. any of the blocks thereof, as described above with reference to Figure 3.

As the discharge device 430, in some examples, may comprise the device 10 of Figure 1 or the device 100 of Figure 2, the discharge device 430 may comprise belt movably disposed in a housing of the device 430 and the nozzle 436 may comprise a hole in the belt. The belt may comprise two holes and the device 430 may therefore comprise two nozzles in some examples. In these examples, the device 430 may comprise a movable roller, or two movable rollers, and the belt may be is wound around the or each roller forming an endless loop wrapping the rollers, wherein the rollers are to move the belt. In these examples the controller 450 may be to control movement of the rollers to control movement of the belt.

Examples in the present disclosure can be provided as methods, systems or machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. It shall be understood that each flow and/or block in the flow charts and/or block diagrams, as well as combinations of the flows and/or diagrams in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the spirit of the present disclosure. It is intended, therefore, that the method, apparatus and related aspects be limited only by the scope of the following claims and their equivalents. It should be noted that the above-mentioned examples illustrate rather than limit what is described herein, and that those skilled in the art will be able to design many alternative implementations without departing from the scope of the appended claims.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A gas ejection device for a cutting apparatus, the gas ejection device comprising:
a housing to retain a gas;
a slot provided in the housing; and
a nozzle movably disposed within the slot, the nozzle to discharge a gas retained in the housing.

2. A gas ejection device according to claim 1, further comprising a belt movably disposed in the housing, wherein the nozzle comprises a hole in the belt.

3. A gas ejection device according to claim 2, wherein the belt comprises a metallic element.

4. A gas ejection device according to claim 2, wherein the hole comprises a first hole and wherein the belt comprises a second hole.

5. A gas ejection device according to claim 2, further comprising two movable rollers, wherein the belt is wound around the two rollers forming an endless loop wrapping the rollers, wherein the rollers are to move the belt.

6. A gas ejection device according to claim 5, further comprising a controller to control the movement of the rollers.

7. A gas ejection device according to claim 1, wherein the housing comprises an inlet for gas.

8. A gas ejection device according to claim 1, wherein the gas comprises nitrogen.

9. A method comprising:
causing a laser to discharge a laser beam toward an angled mirror,
reflecting, at the angled mirror, the laser beam toward a substrate to cut the substrate;
moving a gas nozzle within a movable slot of a housing retaining a gas such that the nozzle is positioned proximate the area in which the laser beam is cutting the substrate; and
causing the gas nozzle to discharge the gas retained by the housing towards the substrate.

10. A method according to claim 9, further comprising:
moving the laser to change the location of the cut on the substrate; and
causing the gas nozzle to move synchronously with the laser.

11. A cutting apparatus comprising:
a cutting station to receive a printed media, the cutting station comprising a laser cutting device and a mirror, wherein the laser cutting device is to emit a laser beam toward the mirror and wherein the mirror is to reflect the laser beam toward a printed media to cut the printed media; and
a discharge device comprising a nozzle to discharge a gas toward a location where the laser beam is to cut the printed media, the nozzle being movably disposed within a slot of the discharge device.

12. A cutting apparatus as claimed in claim 11 wherein the discharge device is disposed in the cutting apparatus such that the slot of the device is parallel to the mirror.

13. A cutting apparatus as claimed in claim 11 wherein the slot and mirror are disposed at the same angle relative to a direction of travel of the media through the cutting station.

14. A cutting apparatus as claimed in claim 11, wherein the discharge device is disposed so as to direct gas toward a surface of the media that is to be cut by the laser.

15. A cutting apparatus as claimed in claim 11, wherein the discharge device is disposed so as to direct gas toward a surface of the media opposite the surface of the media that is to be cut by the laser.
